# EUROPEAN PATENT SPECIFICATION

(11) **EP 1 603 098 B1**
(45) Date of publication and mention of the grant of the patent: **24.01.2007**
(21) Application number: 05016963.0
(22) Date of filing: 03.07.2002
(51) Int. Cl.: G08G 5/00, G01C 23/00

(54) **System and method for producing flight pathway**
System und Verfahren zur Erzeugung von Flugplandaten
Système et methode permettant de créer une trajectoire de vol

(30) Priority: 06.07.2001 US 303585 P
(43) Date of publication of application: 07.12.2005
(62) Divisional of application: 02752168.1
(73) Proprietor: L-3 Communications Avionics Systems, Inc., Grand Rapids, MI 49512-9704 (US)
(72) Inventor: Brust, Clifford, S., Dayton OH 45430 (US); Evans, Gary, Troy OH 45373 (US)
(74) Representative: Schwabe - Sandmair - Marx

(56) References cited:
- US-A- 5 798 713
- US-A- 5 920 321

## Description

### Background of the Invention

Contemporary aircraft make extensive use of computer generated displays. Compared to earlier instrumentation, computer generated displays are easier for pilots to use and to understand, an advantage that can prove important when quick decisions must be made. One portion of such a display could be a synthetic view of the airspace through which the pilot is to fly with the pathway marked in an easy to follow manner. Such a view can be generated from flight plan data. Such a display may also include navigation information such as a compass rose and information concerning the aircraft's current heading and direction of travel. Such a system is known from US-A-5 798 713.

United States Patent Nos, 5,420,582 and 5,798,713 disclose a method and apparatus for displaying flight-management information for an aircraft. A three-dimensional display of the flight space with at least one horizon and the predicted flight path of the aircraft are effected by means of an image reproduction device. The predicted flight path is preferably displayed as a series of symbols that assume, within the flight space displayed, the predicted position and the predicted altitude of the aircraft with respect to the flight space at different points in time.

### Summary of the Invention

The present invention provides a system, program and method for displaying a three-dimensional image of airspace that includes a series of translucent, horizontal "pavers" that lie like stepping stones marking the selected flight path. In addition, the display includes a series of vertical rectangles - called "wickets" - which bracket the selected flight path. One or more of the wickets includes a graphical representation of the direction the aircraft should be flying through the wicket. In the image the wickets and pavers are presented from the point of view of alrcraft's current position. The system accommodates changes in course by generating a new flight path when instructed to do so. The new flight path is created in a way that assures continuous guidance for the pilot and sufficient time for the pilot to adjust to the new course.

Thus, according to one broad aspect of the invention, there is provided a method, program and system for presenting flight path information for an aircraft in a three-dimensional airspace display, wherein flight plan data is received; aircraft performance data is received; the data is processed to form selected flight path data; first and second symbols are generated in response to the selected flight path data, the first symbols showing boundaries around the selected flight path, and the second symbols following the selected flight path; and the first and second symbols are displayed in a three dimensional airspace display. As is preferred, the symbols updated and displayed from the point of view of the present position of the aircraft.

To further aid navigation in accordance with the invention, the display (in combination or separately from other features of the present invention) may include a compass rose which indicates the aircraft's present heading and direction of flight. The compass rose is generated from data representing a traditional two-dimensional view of a compass rose that is rotated using a graphics processor to show a three dimensional view of the compass rose in a plane that appears nearly horizontal in the three dimensional airspace image. In addition various landmarks such as airports and navigation beacons, as well as geopolitical boundaries may be included in the display.

The foregoing and other features of the invention are defined by the attached claims.

### Brief Description of the Drawings

Figure 1 is an illustration of a three dimensional airspace image resulting from use of art related to the present invention.
Figure 2 is a schematic illustration of a computer system suitable for carrying out the present invention.
Figure 3 is a flow diagram illustrating the process of generating a flight pathway from various input parameters.
Figure 4 is an illustration of a three dimensional airspace display that includes a compass rose resulting from the use of the present invention.

### Description of Preferred Embodiments

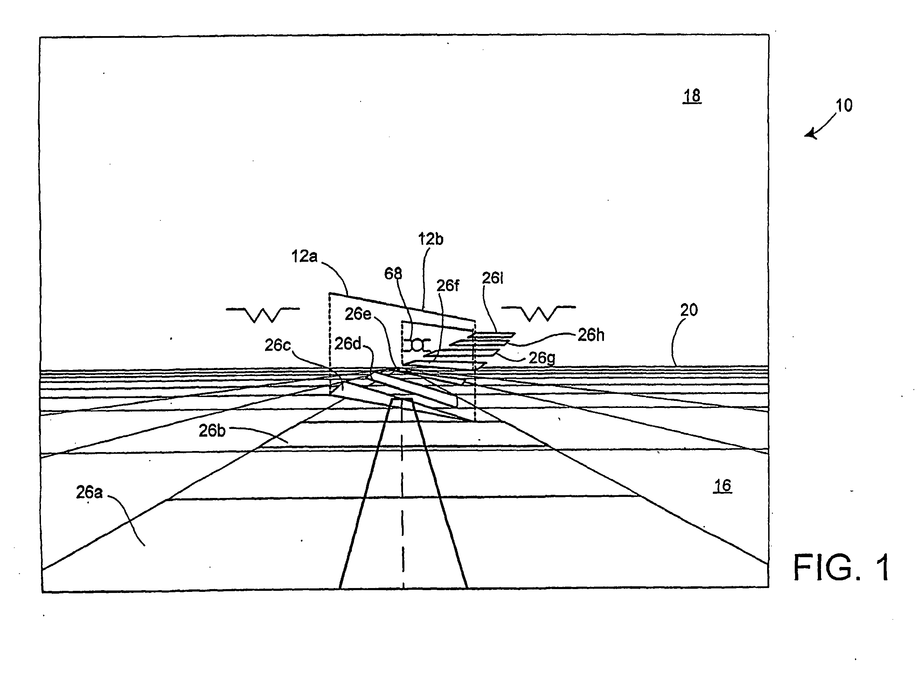

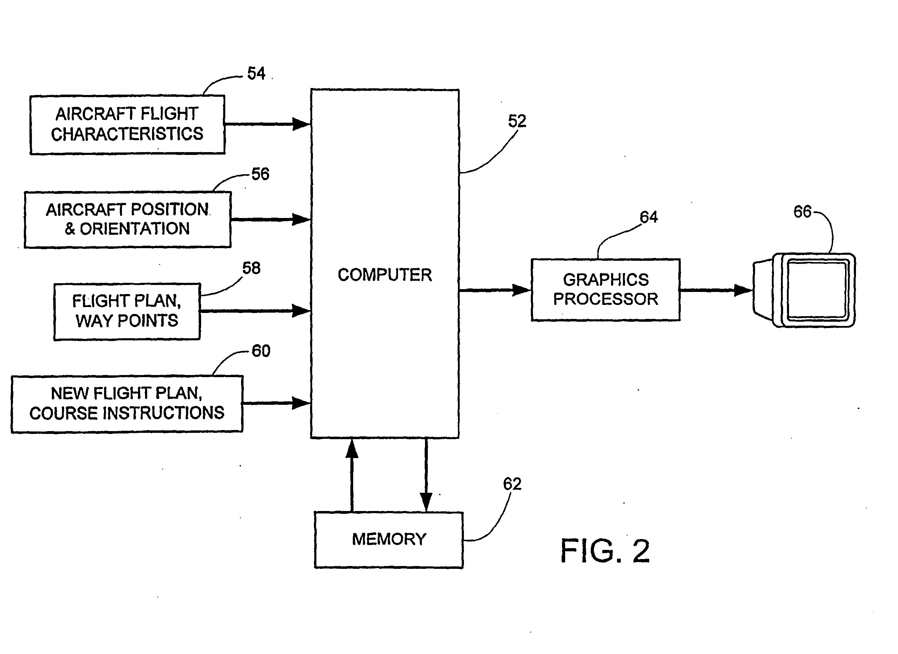

A dynamic, three dimensional image 10 (Figure 1) of airspace is displayed to facilitate piloting an aircraft. The image includes a representation in three dimensions of upcoming sections of a selected flight path. The flight path is represented by a series of wickets 12a and 12b (preferably open rectangles) superimposed on a background representing the earth 16 and sky 18 meeting at an artificial horizon 20. Each wicket 12 frames a polygon (although other shapes may be used) that appears to lie in a vertical plane of the three dimensional airspace image, like a window frame through which the aircraft should fly. The flight path is also represented by a series of "pavers" 26a - 26i which preferably are translucent polygons that follow the flight path. The pavers appear to lie in a horizontal plane of the three dimensional airspace image like stepping stones in the sky, appearing to recede toward the horizon. The wickets 12 and pavers 26 are generated by a program carried out by a computer (Figure 2). The image may be updated 15 to 30 times a second, and so during flight, the wickets 12 and pavers 26 appear to approach from the distance and move to the front of the three dimensional airspace image, giving a visual impression of the aircraft flying through the wickets and along the length of the pavers, assuming the plane is flying according to the selected flight plan.

A system according to a preferred embodiment of the present invention is shown schematically in Figure 2. The system includes a computer 52, a means 54 for the computer to acquire flight performance characteristics of the aircraft, means 56 for acquiring information concerning the aircrafts' position, altitude and heading, means 58 for providing the computer with flight plan information and means 60 for inputting new flight plan information. The computer has associated with it a memory 62 and a graphics processor 64 which controls a cockpit display 66.

The cockpit display 66 may be, for example, a cathode ray tube (CRT), a liquid crystal display screen, a gas plasma-based flat panel display, or other suitable display device.

The memory 62 may include both volatile and nonvolatile memory components. Volatile components are those that do not retain data values upon loss of power. Nonvolatile components are those that retain data upon a loss of power. Thus, the memory 62 may comprise, for example, random access memory (RAM), read-only memory (ROM), hard disk drives, floppy disks accessed via an associated floppy disk drive, compact discs accessed via a compact disc drive, magnetic tapes accessed via an appropriate tape drive, and/or other memory components, or a combination of any two or more of these memory components. In addition, the RAM may comprise, for example, static random access memory (SRAM), dynamic random access memory (DRAM), or magnetic random access memory (MRAM) and other such devices. The ROM may comprise, for example, a programmable read-only memory (PROM), an erasable programmable read-only memory (EPROM), an electrically erasable programmable read-only memory (EEPROM), or other like memory device.

When a pilot prepares for a flight according to the present invention, (s)he may enter the flight plan information 58 (Figure 2) into a computer 52 for processing. The flight plan usually includes the starting airport or location, the destination airport or location, and waypoints which define the route to be followed and the assigned altitudes for each leg of the trip. The entered information may also include detailed departure information including runway assignments and departure procedures.

The computer 52 (Figure 2) includes a set of instructions that generate a flight pathway. These flight pathway instructions may be loaded into the computer's processor from memory 62. The pathway generator logic, taking into account the particular aircraft involved and its flight characteristics as indicated at 54 and using conventional methodologies, preferably generates a curved, flyable path in three dimensions that conforms to the flight plan. This pathway information is stored in the memory 56 (Figure 2). The computer 52 samples pathway information at regular intervals, and places wickets 12 and pavers 26 at the sampled locations along the pathway. This information is passed to the graphics processor 64 which generates the image of a three dimensional airspace, e.g., 10 in Figure 1, for display on the cockpit display 66.

One boundary condition on the displayed image may be that the pathway does not include any flight path information below 200 feet altitude above ground level (altitude AGL). This limit may be imposed because at such a low altitude it is desirable for the pilot to watch the ground, not the cockpit display. Otherwise the initial pathway may include all the turns and elevation changes from takeoff to landing that were input by the pilot.

The three-dimensional airspace image generated from the pathway information is dynamic and is updated as the position of the aircraft changes with respect to the flight path. However, in order to reduce clutter in the displayed image, another boundary condition, termed a "clipping volume" may be imposed. The clipping volume extends from immediately in front of the aircraft to 3 miles in front of the aircraft. Wickets and pavers outside this volume preferably are not displayed because they are either too close to be of value to the pilot or too far ahead for present consideration.

The display of wickets 12 and pavers 26 is especially useful in conjunction with a predictor 68 (Figure 1). The predictor 68 is an image on the display representing the position where the aircraft will be at a moment a specified time interval in the future, assuming no changes are made to the flight controls. The length of time in front of the aircraft is a selectable time, being shorter for slower aircraft and longer for faster aircraft. For general aviation aircraft the predictor may be positioned about 5 to 20 seconds in advance of the aircraft, with 12 seconds in advance of the current position being particularly satisfactory. When the predictor 68 is included in the display, the pilot may navigate by maneuvering the aircraft so that the predictor lies within the wickets 12, following the road defined by the pavers 26.

The flightpath is displayed as a series of wickets 12 and pavers 26 which appear in the sky of the three dimensional airspace image. The wickets 12 bracket the intended flight path; at lower altitudes it is typical for the flight plan to specify a vertical range of 150 feet above and below the specified elevation and horizontal range of about 300 to each side of the specified path. The 150 foot vertical tolerance and 300 foot horizontal tolerance are enlarged once a cruising altitude is reached. However, these margins may be adjustable according to any requirements of the flight that may be received from Air Traffic Control or imposed by the pilot. On approach to a landing, the flight path illustrated by the wickets 12 and pavers 26 can be made exactly the width of the runway.

The wickets 12 show the outer boundaries of flight path through space while the pavers trace the bottom of the vertical tolerance from the flightpath. When approaching a wicket 12 head on, that is, perpendicular to the plane of the wicket, the desired flight path preferably is through the center of the wicket, above the paver 26. As noted above, the size of the wickets may be adjusted for various parts of the flight plan. For example, in the take off and landing portions the wickets are relatively smaller, reflecting the need for careful navigation at these points of the flight. Once at cruising altitude, however, the wickets may be opened up to allow for more deviation from the centerline of the flight path.

The wickets 12 are positioned on the display to guide the pilot. The wickets 12 are presented in the three dimensional image in a way that provides information to the pilot concerning the proper attitude and roll of the airplane. The wickets 12 appear higher in the sky 18 than the bug 68 when the aircraft should climb to reach the desired flight path and lower in the sky if the aircraft should be descending.

The wickets 12 and pavers 26 also change shape to suggest changes in the direction of the flight path. In a preferred embodiment, the wickets 12 appear as rectangles when the flightpath is perpendicular to the apparent plane of the wickets. However, where the aircraft should be turning, the succession of wickets moves to the right or left (as appropriate) and further may be distorted into parallelograms to indicate the appropriate degree of roll for the aircraft. For example wickets 12a and 12b in Figure 1 illustrate an upcoming right hand turn. These wickets 12a and 12b have vertical sides, but their top and bottom edges are slanted with respect to the artificial horizon 20, indicating to the pilot that the aircraft should bank in order to make the turn. Similarly, the pavers, like paver 26e, are tapered into trapezoids to mark a turn.

The system preferably places the wickets 12 and pavers 26 so that a constant time interval occurs between each at the aircraft's ground speed. For example, the wickets 12 and pavers 26 may be five seconds apart, which for an aircraft flying at 264 feet per second means that the wickets and pavers are spaced apart 1320 feet. Typically the system is set to generate two pavers 26 for each wicket 12, so the pavers would pass every 2.5 seconds in this example. If the aircraft's speed changes, the spacing between the wickets and pavers also changes so that the pavers 26 appear to pass by at the same rate, in this example every 2.5 seconds. It has been found through experimentation that when the pavers 26 appear to go by in the image every 1 to 5 seconds the pilot has a satisfactory sensation of movement. If the pavers pass by more frequently, they become a distracting blur to the pilot, and if they are too infrequent, the pilot does not get a sufficient impression of movement from viewing the display.

If the aircraft strays from its flight plan by dropping below the apparent elevation of the pavers 26, that is, below the selected vertical margin of error (in the example, 150 feet), the pavers disappear from the screen. This is a visual indication for the pilot that he should ascend. When the aircraft regains sufficient altitude, the pavers reappear on the screen.

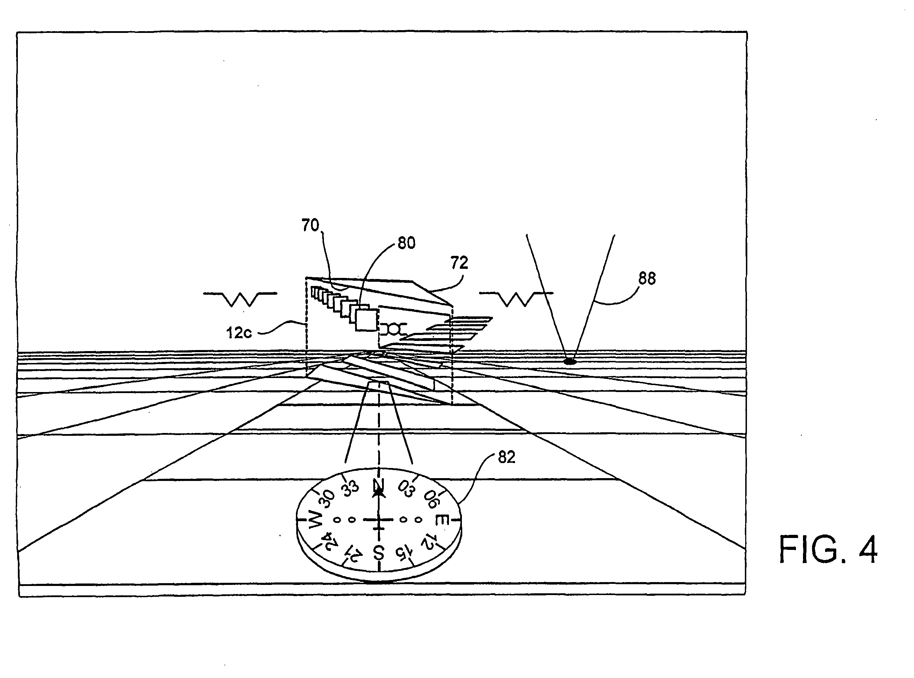

One or more of the wickets 12 may include an indication of the direction the aircraft is supposed to fly through the wicket. Ordinarily there is not much need for this information because flying from one wicket to the next starting at takeoff naturally produces flight in the correct direction. Yet there are times, especially if the pilot has made an unanticipated turn and is returning to the flight path after such an unexpected deviation that it may not be immediately evident what direction to go. The indication on the wicket of intended direction can assist the pilot to avoid misdirected flight. For this reason some or all of the wickets 12 may have a top cross bar 70 (Figure 4) that includes an arrow 72 pointing in the direction of intended flight. Of course there are other shapes that could serve the purpose as well. The cross bar 70 which marks the top of the wicket may be removed entirely in favor of just the lines marking the front edges of the arrow 72, or different arrows or the like could be made to appear to extend in the desired direction, either floating in space, like a paver, or attached to a wicket.

As the aircraft's position changes, its new position is determined by conventional means 80 such as from GPS data and/or from an inertial guidance system, and this information is sent to the computer 52. The computer calculates the changes in position compared to the previous position and the flight path. The resulting information is passed to a graphics processor that produces a new three-dimensional display showing the wickets 12 and pavers 26 in their new positions relative to the aircraft. As the aircraft advances, new wickets and pavers are displayed, appearing first in the apparent distance and then moving toward the foreground of the three-dimensional airspace image as the aircraft advances along the flight path.

The pathway generator may regenerate the pathway as required during the flight or even before. For example, if the departure information is not available at the time the initial pathway is generated, that information may be added later and the pathway re-generated to include this information prior to take off. During flight, the pilot may, for one reason or another, change course. (S)he may do so to avoid weather or because of an Air Traffic Control instruction. Further, the pathway may be updated because of the addition of arrival and/or approach information. A pilot may not have an assigned runway at the time of takeoff, or the assigned runway or approach flight plan may change between the time the flight plan is initially prepared and the time the destination is approached. In this case the new information is entered into the computer at 60 and a new pathway is generated. In such a situation the system takes as its then "starting point" not the airport of origination, but the airplane's current operating condition (current location and orientation) obtained from input means 56. The system then generates new pathway connecting the present location with the desired end point. Whenever the pathway is updated, the program provides the new pathway with a first segment which is, for example, a 5 to 30 second continuation of the current flight path.

The length of this continuation path depends on a number of variables. The time should be long enough for the computer to generate a new flightpath and for the graphics processor to generate the necessary wickets and pavers. It should also leave time after the display is updated for the pilot to react, and it should take into account the flight performance characteristics of the particular aircraft, since the flight path should not suggest the pilot make a maneuver that the aircraft cannot perform comfortably. This initial segment assures that the system takes all these considerations into account. Experiments have shown that a delay of 5 to 30 seconds before any change of course is required is generally sufficient, depending on the aircraft and its speed.

The system according to the present invention also enables a pilot to view a three-dimensional plot of a requested course change before executing it. When a course change becomes necessary, the pilot may enter the new instructions into the system's computer. The system than immediately projects the requested course change on the airspace display in a characteristic form, e.g., a series of small, square wickets 80. (Figure 4.) The pilot can then see the planned new course in the display, and he is provided with an opportunity to accept the planned course change. The pilot could, for example, reject the proposed course change if it leads to airspace which is forbidden or appears to lead to hazardous conditions. This is especially useful when the display also includes information about surrounding geography, obstacles, and/or weather. If the proposed change is not accepted by an affirmative entry by the pilot, the system removes the proposed course, leaving only the preexisting flightpath. If the pilot does accept the new course, then the small boxes are replaced by pavers and wickets to guide the way. While the tentative course is described as appearing as a series of small squares 80, obviously other representations are possible: a tapering solid line of a distinctive color, could be used, a pair of lines that approach each other but appear parallel in the three dimensional airspace image could be used, as could closed geometric figures such as triangles, half moons etc. It is preferable that they at least be distinctive and allow the pilot to immediately see the proposed change in the image if the three dimensional airspace in which the aircraft is flying.

The present invention further contemplates a compass rose 80 (Figure 4) displayed as part of the three-dimensional airspace display. The compass rose 82 is generated by providing heading information to the computer together with information describing a conventional, two-dimensional compass rose. This compass rose 82 is assigned a thickness, and that information is then transferred to the graphics processor 69 which rotates the image so that the compass rose appears to lie approximately in the plane of the ground in the three-dimensional airspace display.

In addition various landmarks may be made to appear in the airspace image. These landmarks may include radio beacons 88 used for navigation, airport runways, political boundaries, and the like. The presence of these landmarks can assist the pilot in choosing his course and staying on it. Further the present invention may be used in connection with a synthetic display of the terrain below the aircraft. This display may be created in accordance with the procedures described in a United States patent application filed concurrently herewith and entitled System and Method For Synthetic Flight Display, the entire disclosure of which is incorporated herein by reference.

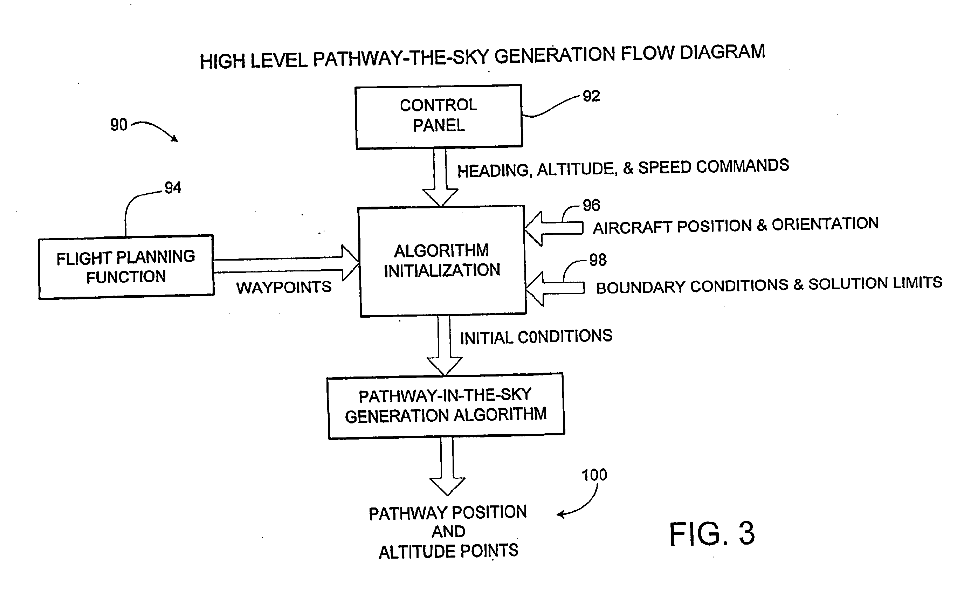

Although the logic 90 (Figure 3) of the present invention is embodied in software or code executed by general purpose hardware as discussed above, as an alternative the logic 90 (Figure 3) may also be embodied in dedicated hardware or a combination of software/general purpose hardware and dedicated hardware. If embodied in dedicated hardware, the logic 90 (Figure 3) can be implemented as a circuit or state machine that employs any one of or a combination of a number of technologies. These technologies may include, but are not limited to, discrete logic circuits having logic gates for implementing various logic functions upon an application of one or more data signals, application specific integrated circuits having appropriate logic gates, programmable gate arrays (PGA), field programmable gate arrays (FPGA), or other components, etc. Such technologies are generally well known by those skilled in the art and, consequently, are not described in detail herein.

The block diagram and/or flow chart of Figure 2 shows the architecture, functionality, and operation of an implementation of the logic 90 (Figure 3). If embodied in software, each block may represent a module, segment, or portion of code that comprises program instructions to implement the specified logical function(s). The program instructions may be embodied in the form of source code that comprises human-readable statements written in a programming language or machine code that comprises numerical instructions recognizable by a suitable execution system such as a processor in a computer system or other system. The machine code may be converted from the source code, *etc*. If embodied in hardware, each block may represent a circuit or a number of interconnected circuits to implement the specified logical function(s).

Although the block diagram and/or flow chart of Figure 3 shows a specific order of execution, it is understood that the order of execution may differ from that which is depicted. For example, the order of execution of two or more blocks may be scrambled relative to the order shown. Also, two or more blocks shown in succession in Figure 3 may be executed concurrently or with partial concurrence. In addition, any number of counters, state variables, warning semaphores, or messages might be added to the logical flow described herein, for purposes of enhanced utility, accounting, performance measurement, or providing troubleshooting aids, etc. It is understood that all such variations are within the scope of the present invention. Also, the block diagram and/or flow chart of Figure 3 is relatively self-explanatory and are understood by those with ordinary skill in the art to the extent that software and/or hardware can be created by one with ordinary skill in the art to carry out the various logical functions as described herein.

Also, where the logic 90 (Figure 3) comprises software or code, it can be embodied in any computer-readable medium for use by or in connection with an instruction execution system such as, for example, a processor in a computer system or other system. In this sense, the logic may comprise, for example, statements including instructions and declarations that can be fetched from the computer-readable medium and executed by the instruction execution system. In the context of the present invention, a "computer-readable medium" can be any medium that can contain, store, or maintain the logic 90 (Figure 3) for use by or in connection with the instruction execution system. The computer readable medium can comprise any one of many physical media such as, for example, electronic, magnetic, optical, electromagnetic, infrared, or semiconductor media. More specific examples of a suitable computer-readable medium would include, but are not limited to, magnetic tapes, magnetic floppy diskettes, magnetic hard drives, or compact discs. Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

## Claims

1. A method of presenting flight path information for an aircraft in a three-dimensional airspace display, said method comprising the steps of receiving flight plan data, receiving aircraft performance data, processing the data to form selected flight path data, generating symbols (12/26) in response to the selected flight path data, the symbols (12) showing boundaries around the selected flight path including displaying the symbols from the point of view of the present position of the aircraft, wherein the symbols define a series of targets through which the aircraft should fly in order to follow the flight plan and at least one of the symbols having associated therewith an indicator (72) of the direction through which, the aircraft should pass through the boundary depicted by the symbol, and displaying the first and second symbols in a three-dimensional airspace display.

2. The method of claim 1 further including the step of receiving data describing the present position of the aircraft, and the step of displaying the symbols includes the step of updating and displaying the symbols from the point of view of the present position of the aircraft.

3. The method of claim 1 or claim 2 wherein one of the symbols (12) are parallelograms.

4. The method of any preceding claim wherein the symbols (12) appear spaced apart uniformly in the three-dimensional airspace display, and preferably the symbols appear uniformly spaced apart a distance in the three-dimensional airspace display that is dependent on the ground speed of the aircraft.

5. The method of any preceding claim wherein the symbol (12) is a parallelogram, and the step of displaying the symbols from the point of view of the present position of the aircraft includes varying the length of the sides of the parallelogram and the angles included between the sides of the parallelograms.

6. The method of any preceding claim further including the step of displaying a compass rose (82) in the three-dimensional airspace display, the compass rose being displayed so as to appear to lie approximately in a horizontal plane below the present position of the aircraft.

7. The method of any preceding claim wherein the step of receiving flight plan data includes including receiving data corresponding to an initial flight plan, processing the data to form first flight path data, and thereafter receiving data corresponding to a second flight plan and to the aircraft's current position, processing the second flight plan data to form a second flight path which begins at the aircraft's current position, the second flight path including an initial segment that is an unaltered continuation of the initial flight plan.

8. The method of any preceding claim wherein said step of generating symbols includes generating second symbols (26) that are parallelepipeds, and the step of displaying symbols includes the step of displaying the second symbols as a series of parallelepipeds lying in a plane parallel to the plane of the selected flight path in the three-dimensional airspace display.

9. The method of claim 8 wherein the second symbols appear to lie in the plane of the selected flight path.

10. A program stored on a computer readable medium for presenting selected flight path information for an aircraft in a three-dimensional airspace display, including code that defines data categories for flight plan data, code that defines data categories for aircraft performance data, code that processes the data to form selected flight path data, code that generates display symbols (12/26) in response to the selected flight path data, the symbols (12) showing boundaries around the selected flight path including displaying the symbols (12) from the point of view of the present position of the aircraft, wherein the symbols (12/26) define a series of targets through which the aircraft should fly in order to follow the flight plan, and at least one of the symbols having associated therewith an indicator (72) of the direction through which the aircraft should pass through the boundary depicted by the symbols (12/26).

11. A system for presenting flight path information for an aircraft in a three-dimensional airspace display, said system including means for receiving flight plan data, means for receiving aircraft performance data, means for processing the data to form selected flight path data, means for generating symbols (12/26) in response to the selected flight path data, the symbols (12) showing boundaries around the selected flight path including displaying the symbols from the point of view of the present position of the aircraft, wherein the symbol defines a serious of targets through which the aircraft should fly in order to follow the flight path and at least one of the symbols having associated therewith an indicator (72) of the direction through which the aircraft should pass through the boundary depicted by the symbol, and means for displaying the symbols in a three-dimensional airspace display.

## Patentansprüche

1. Verfahren zur Darstellung von Flugbahninformationen für ein Flugzeug in einer dreidimensionalen Luftraumanzeige, wobei das Verfahren die Schritte des Empfangens von Flugbahndaten, des Empfangens von Flugzeug-Leistungsdaten, des Verarbeitens der Daten, um ausgewählte Flugbahndaten zu bilden, des Erzeugens von Symbolen (12/26) als Reaktion auf die ausgewählten Flugbahndaten, wobei die Symbole (12) Abgrenzungen um die ausgewählte Flugbahn zeigen, die die Anzeige der Symbole vom Betrachtungspunkt der gegenwärtigen Position des Flugzeugs beinhalten, wobei die Symbole eine Reihe von Zielen definieren, durch die das Flugzeug fliegen sollte, um dem Flugplan zu folgen, wobei mit wenigstens einem der Symbole eine Anzeigevorrichtung (72) der Richtung verbunden ist, durch die das Flugzeug durch die von dem Symbol dargestellte Abgrenzung hindurch fliegen sollte, und des Anzeigens der ersten und zweiten Symbole in einer dreidimensionalen Luftraumanzeige umfasst.

2. Verfahren nach Anspruch 1, des Weiteren mit dem Schritt zum Empfangen von Daten, die die gegenwärtige Position des Flugzeugs beschreiben, wobei der Schritt zum Anzeigen der Symbole den Schritt zum Aktualisieren und Anzeigen der Symbole vom Betrachtungspunkt der gegenwärtigen Position des Flugzeugs aufweist.

3. Verfahren nach Anspruch 1 oder Anspruch 2, wobei eins der Symbole (12) Parallelogramme sind.

4. Verfahren nach einem der vorhergehenden Ansprüche, wobei die Symbole (12) in der dreidimensionalen Luftraumanzeige gleichförmig beabstandet erscheinen und vorzugsweise die Symbole in einem Abstand, der von der Grundgeschwindigkeit des Flugzeugs abhängig ist, in der dreidimensionalen Luftraumanzeige gleichförmig beabstandet erscheinen.

5. Verfahren nach einem der vorhergehenden Ansprüche, wobei das Symbol (12) ein Parallelogramm ist und der Schritt des Anzeigens der Symbole vom Betrachtungspunkt der gegenwärtigen Position des Flugzeugs das Variieren der Länge der Seiten des Parallelogramms und der Winkel aufweist, die zwischen den Seiten des Parallelogramms enthalten sind.

6. Verfahren nach einem der vorhergehenden Ansprüche, des Weiteren mit dem Schritt zum Anzeigen einer Kompassrose (82) in der dreidimensionalen Luftraumanzeige, wobei die Kompassrose so gezeigt wird, dass sie näherungsweise in einer horizontalen Ebene unter der gegenwärtigen Position des Flugzeugs zu liegen scheint.

7. Verfahren nach einem der vorhergehenden Ansprüche, wobei der Schritt des Empfangens der Flugplandaten das Empfangen von Daten entsprechend einem Anfangsflugplan, das Verarbeiten der Daten, um erste Flugbahndaten zu bilden, und danach das Empfangen von Daten entsprechend eines zweiten Flugplans und entsprechend der gegenwärtigen Position des Flugzeugs und das Verarbeiten der zweiten Flugplandaten aufweist, um eine zweite Flugbahn zu bilden, die an der gegenwärtigen Position des Flugzeugs beginnt, wobei die zweite Flugbahn ein anfänglichesegment aufweist, das eine unveränderte Weiterführung des Anfangsflugplans ist.

8. Verfahren nach einem der vorhergehenden Ansprüche, wobei der Schritt des Erzeugens der Symbole das Erzeugen zweiter Symbole (26) aufweist, die parallelflach sind, und der Schritt des Anzeigens der Symbole den Schritt des Anzeigens der zweiten Symbole als eine Reihe von parallelflachen Symbolen aufweist, die in einer Ebene parallel zu der Ebene der ausgewählten Flugbahn in der dreidimensionalen Luftraumanzeige liegen.

9. Verfahren nach Anspruch 8, wobei die zweiten Symbole in der Ebene der ausgewählten Flugbahn zu liegen scheinen.

10. Auf einem computerlesbaren Medium zur Darstellung ausgewählter Flugbahninformationen für ein Flugzeug in einer dreidimensionalen Luftraumanzeige gespeichertes Programm, das einen Code, der Datenkategorien für Flugplandaten definiert, einen Code, der Datenkategorien für Flugzeug-Leistungsdaten definiert, einen Code, der die Daten verarbeitet, um ausgewählte Flugbahndaten zu bilden, und einen Code aufweist, der Anzeigesymbole (12/26) als Reaktion auf die ausgewählten Flugbahndaten erzeugt, wobei die Symbole (12) Abgrenzungen um die ausgewählte Flugbahn zeigen, die die Anzeige der Symbole (12) vom Betrachtungspunkt der gegenwärtigen Position des Flugzeugs beinhalten, wobei die Symbole (12/26) eine Reihe von Zielen definieren, durch die das Flugzeug fliegen sollte, um dem Flugplan zu folgen, und wenigstens einem der Symbole eine Anzeigevorrichtung (72) der Richtung zugeordnet ist, durch die das Flugzeug durch die von den Symbolen (12/26) dargestellte Abgrenzung hindurch fliegen sollte.

11. System zur Darstellung von Flugbahninformationen für ein Flugzeug in einer dreidimensionalen Flugraumanzeige, wobei das System eine Anordnung zum Empfangen von Flugplandaten, eine Anordnung zum Empfangen von Flugzeug-Leistungsdaten, eine Anordnung zum Verarbeiten der Daten, um ausgewählte Flugbahndaten zu bilden, eine Anordnung zum Erzeugen von Symbolen (12/26) als Reaktion auf die ausgewählten Flugbahndaten, wobei die Symbole (12) Abgrenzungen um die ausgewählte Flugbahn zeigen, die das Anzeigen der Symbole vom Betrachtungspunkt der gegenwärtigen Position des Flugzeugs beinhalten, wobei das Symbol eine Reihe von Zielen definiert, durch die das Flugzeug fliegen sollte, um der Flugbahn zu folgen, und wenigstens einem der Symbole eine Anzeigevorrichtung (72) der Richtung zugeordnet ist, durch die das Flugzeug durch die von dem Symbol dargestellte Abgrenzung hindurch fliegen sollte, und eine Anordnung zum Anzeigen der Symbole in einer dreidimensionalen Luftraumanzeige aufweist.

## Revendications

1. Procédé pour présenter des informations de trajectoire de vol pour un avion sur un afficheur d'espace aérien tridimensionnel, ledit procédé comportant les étapes consistant à recevoir des données de plan de vol, recevoir des données de performance d'avion, traiter les données pour former des données de trajectoire de vol sélectionnée, générer des symboles (12/26) en réponse aux données de trajectoire de vol sélectionnée, les symboles (12) représentant des frontières autour de la trajectoire de vol sélectionnée incluant l'affichage des symboles du point de vue de la position actuelle de l'avion, dans lequel les symboles définissent une série de cibles à travers lesquelles l'avion doit voler afin de suivre le plan de vol et au moins l'un des symboles étant associé à un indicateur (72) de la direction à travers laquelle l'avion doit passer à travers la frontière représentée par le symbole, et afficher les premiers et seconds symboles sur un afficheur d'espace aérien tridimensionnel.

2. Procédé selon la revendication 1, incluant de plus l'étape consistant à recevoir des données décrivant la position actuelle de l'avion, et l'étape d'affichage des symboles inclut l'étape consistant à mettre à jour et afficher les symboles depuis le point de vue de la position actuelle de l'avion.

3. Procédé selon la revendication 1 ou la revendication 2, dans lequel certains des symboles (12) sont des parallélogrammes.

4. Procédé selon l'une quelconque des revendications précédentes, dans lequel les symboles (12) apparaissent uniformément espacés sur l'afficheur d'espace aérien tridimensionnel, et de préférence les symboles apparaissent uniformément espacés d'une distance sur l'afficheur d'espace aérien tridimensionnel qui dépend de la vitesse par rapport au sol de l'avion.

5. Procédé selon l'une quelconque des revendications précédentes, dans lequel le symbole (12) est un parallélogramme, et l'étape d'affichage des symboles depuis le point de vue de la position actuelle de l'avion inclut la variation de la longueur des côtés du parallélogramme et des angles inclus entre les côtés des parallélogrammes.

6. Procédé selon l'une quelconque des revendications précédentes, incluant l'étape d'affichage d'une rose compas (82) sur l'afficheur d'espace aérien tridimensionnel, la rose compas étant affichée de manière à apparaître approximativement comprise dans un plan horizontal sous la position actuelle de l'avion.

7. Procédé selon l'une quelconque des revendications précédentes, dans lequel l'étape de réception de données de plan de vol inclut la réception de données correspondant à un plan de vol initial, le traitement des données pour former des données de première trajectoire de vol, et par la suite la réception de données correspondant à un second plan de vol et à la position actuelle de l'avion, le traitement des secondes données de plan de vol pour former une seconde trajectoire de vol qui commence à la position actuelle de l'avion, la seconde trajectoire de vol incluant un segment initial qui est une continuation inchangée du plan de vol initial.

8. Procédé selon l'une quelconque des revendications précédentes, dans lequel ladite étape de génération de symboles inclut la génération de seconds symboles (26) qui sont des parallélépipèdes, et l'étape d'affichage de symboles inclut l'étape d'affichage des seconds symboles sous la forme d'une série de parallélépipèdes situés dans un plan parallèle au plan de la trajectoire de vol sélectionnée sur l'afficheur d'espace aérien tridimensionnel.

9. Procédé selon la revendication 8, dans lequel les seconds symboles apparaissent comme étant compris dans le plan de la trajectoire de vol sélectionnée.

10. Programme mémorisé sur un support lisible par ordinateur pour présenter des informations de trajectoire de vol sélectionnée pour un avion sur un afficheur d'espace aérien tridimensionnel, incluant un code qui définit des catégories de données pour des données de plan de vol, un code qui définit des catégories de données pour des données de performance d'avion, un code qui traite les données pour former des données de trajectoire de vol sélectionnée, un code qui génère un affichage de symboles (12/26) en réponse aux données de trajectoire de vol sélectionnée, les symboles (12) représentant des frontières autour de la trajectoire de vol sélectionnée incluant l'affichage des symboles (12) depuis le point de vue de la position actuelle de l'avion, dans lequel les symboles (12/26) définissent une série de cibles à travers lesquelles l'avion doit voler afin de suivre le plan de vol, et au moins l'un des symboles étant associé à un indicateur (72) de la direction à travers laquelle l'avion doit passer à travers la frontière représentée par les symboles (21/26).

11. Système pour présenter des informations de trajectoire de vol pour un avion sur un afficheur d'espace aérien tridimensionnel, ledit système incluant des moyens pour recevoir des données de plan de vol, des moyens pour recevoir des données de performance d'avion, des moyens pour traiter les données pour former des données de trajectoire de vol, des moyens pour générer des symboles (12'/26) en réponse aux données de trajectoire de vol sélectionnée, les symboles (12) représentant des frontières autour de la trajectoire de vol sélectionnée incluant l'affichage des symboles depuis le point de vue de la position actuelle de l'avion, dans lequel le symbole définit une série de cibles à travers lesquelles l'avion doit voler afin de suivre la trajectoire de vol et au moins l'un des symboles étant associé à un indicateur (72) de la direction à travers laquelle l'avion doit passer à travers la frontière représentée par le symbole, et des moyens pour afficher les symboles sur un afficheur d'espace aérien tridimensionnel.
